# EUROPEAN PATENT APPLICATION

(11) **EP 4 628 296 A1**
(43) Date of publication of application: **08.10.2025**
(21) Application number: 24168823.3
(22) Date of filing: 05.04.2024
(51) Int. Cl.: B32B 1/00, B32B 1/08, B32B 15/08, B32B 15/20, B32B 27/08, B32B 27/30, B32B 27/32, B32B 27/34, B32B 27/36, C08J 5/18

(54) **A LIGHTWEIGHT AND ENVIRONMENTAL-FRIENDLY BAG FOR PHARMACEUTICAL APPLICATIONS**

(71) Applicant: B. Braun Melsungen AG, 34212 Melsungen (DE)
(72) Inventor: RAVUSSIN, Frederic, 34212 Melsungen (DE); MEDICO, Leonard, 34212 Melsungen (DE); VALLOTTON, Raphael, 34212 Melsungen (DE)
(74) Representative: Maiwald GmbH

(57) **Abstract**

A bag for pharmaceutical application, comprising a bag body enclosing a bag cavity, the bag body comprising at least one opening fluidly connecting the bag cavity with the environment, wherein the bag body comprises a body wall, wherein the body wall comprises a film, characterized in that the film has a grammage of equal to or less than 270 g/m² measured according to ISO 536:2019, and the film has an air transmission rate measured according to ISO 15105-1:2007 Annex A (Differential-pressure method, using a pressure sensor) at standard conditions, which results in a volume increase of air per year, which is not higher than 3% of the total volume of the bag cavity.

## Description

### Technical Field of the Invention

The present invention is located in the field of pharmaceutical containers, particularly pharmaceutical bags, such as intravenous (IV) bags.

### Background of the Invention

In many different medical settings, such as in intensive care, critical care, intensive treatment, etc., liquid pharmaceuticals and/or liquid nutrients are administered to patients. Liquid pharmaceuticals and/or liquid nutrients are also administered to patients during a variety of medical procedures, such as surgery. The liquid pharmaceuticals and/or liquid nutrients may be administered in different ways, e.g., intravenously, through a central venous catheter (or central line), via an epidural, or via a subcutaneous injection.

For these applications, pharmaceutical containers are used. For example, in case of intravenous application of liquid pharmaceutical and/or liquid nutrients to a patient, usually intravenous (IV) containers containing said liquid pharmaceutical and/or those liquid nutrients are used. The liquid pharmaceuticals and/or liquid nutrients are usually diluted or suspended in a carrying liquid, which typically is a carrier solution. The IV container typically has one or more information printed on the front and/or back surfaces of the container or permanent information comprising labels attached to the front and/or back surfaces of the container, wherein the information identifies the IV solution contained in that IV container. The permanent labels also include additional information about that IV solution, such as the concentration of the pharmaceutical contained therein, the class of the pharmaceutical contained therein, and/or dosage guidelines of the pharmaceutical contained therein. Typically, the IV container hangs on an IV container stand, e.g., an IV stand pole, and typically an IV tubing line is connected to and extending from the IV container to the patient.

Currently mainly two types of IV containers are available on the market. One type is directed towards semi-rigid bottles, the other type is directed towards flexible pouches.

The requirements for such pharmaceutical, e.g., IV, containers are high, as they must assure general quality and particularly sterility of the contained product during production and shelf life. In particular, these requirements are directed towards heat stability of the container wall material, transparency of the container wall material, impact properties of the container wall material, and water and air permeability of the container wall material.

To meet the requirements of heat stability, transparency, and impact properties, the semi-rigid bottles usually have a sufficiently large wall thickness. Even if highly optimized, typical 500 ml bottles weigh up to 30 g including other parts not being formed by the polymer film, such as the closure and/or the access port and/or the hanger.

Flexible pouches are usually overwrapped in a secondary packaging to meet the requirements of water and air permeability. Hence, typical overwrapped packaging systems available on the market weigh about 27 g (including the primary bag, other parts not being formed by the polymer film, i.e., the closure and/or the access port, and the overwrap) for 500 ml solution content.

### Summary of the Invention

Sustainability becomes more and more important in all kinds of technical fields including healthcare. Key aspects, especially in packaging, are to reduce material consumption and recycle material. Hence, there is the general need for pharmaceutical, in particular intravenous (IV), bags having a reduced amount of plastic material in comparison to the containers known in the prior art.

When the films used to form the pharmaceutical bags are too thin, the gas barrier performances are reduced. In particular, permeability of water vapor increases to a point where it is not possible to ensure that the concentration of the various chemical ingredients in the pharmaceutical solution remains within acceptable limits for a long period of time, which shortens the shelf life of the product, preferably medicinal product, comprised in the pharmaceutical bag. Furthermore, increase of the permeability of air and other gases through the primary films tends to let gases in resulting in an increase of the primary head space thereby inflating the pharmaceutical bag. Such consequence is unwanted as it, for instance, increases the risk of injecting air into the patient at the end of administration and can also, if the bag gets internally pressurized by an excessive primary head space, apply stress on the material and on the sealing area between the different components of the pharmaceutical bag, such as the films and the port system. In extreme cases, the pharmaceutical bag can eventually fail, e.g., progressively delaminate or burst under pressure, and leak.

It Is therefore an object of the present invention to provide a bag for pharmaceutical application using reduced, preferably at least 50 wt.-% less, film material than the market standards, while maintaining a sufficiently high barrier to air permeation without requiring an overwrap. The market standards for similar shelf life typically contain a primary bag (i.e. film) and an overwrap. It has now surprisingly been found that this object can be achieved by a bag for pharmaceutical application, comprising a bag body enclosing a bag cavity, the bag body comprising at least one opening fluidly connecting the bag cavity with the environment, wherein the bag body comprises a body wall, wherein the body wall comprises a film, characterized in that the film has a grammage of equal to or less than 270 g/m² measured according to ISO 536:2019, and the film has an air transmission rate measured according to ISO 15105-1:2007 Annex A (Differential-pressure method, using a pressure sensor) at standard conditions, which results in a volume increase of air per year that is not higher than 3% of the total volume of the bag cavity.

The advantage of the present invention is that the pharmaceutical bag as known from the prior art, which comprises two packaging layers, one first for the mechanical properties and one second, wrapped around the first, for the barrier properties, can be replaced by just one packaging which provides both mechanical and barrier properties at once. This reduces the amount of material used for the pharmaceutical bag and thus reduces weight and environmental impact. Furthermore, the production process of the pharmaceutical bag according to the present invention is facilitated in comparison to the prior art, as no additional wrapping step is necessary.

### Brief Description of the Drawings

- Figure 1: shows a diagram showing the air intake development over time of Comparative Examples CE1-3.
- Figure 2: shows a diagram showing the water loss development over time of Comparative Examples CE1-3.

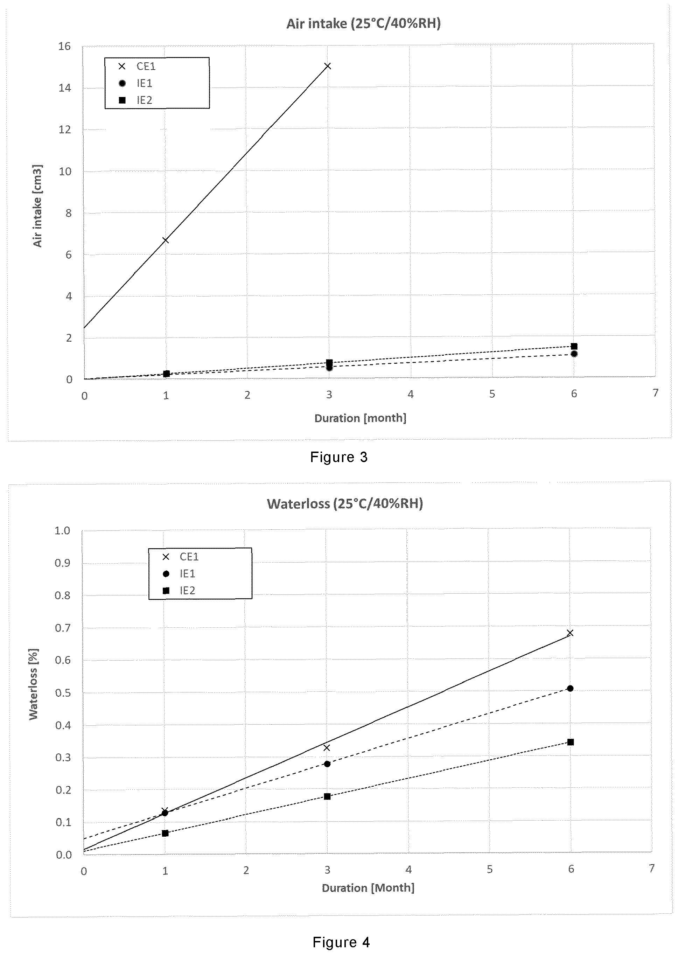

- Figure 3: shows a diagram showing the air intake development over time of Comparative Examples CE1 and Inventive Examples IE1-2.
- Figure 4: shows a diagram showing the water loss development over time of Comparative Examples CE1 and Inventive Examples IE1-2.

### Definitions

The term *"sterile"* as used denotes the status of an object having a significantly reduced number of bacteria and/or viruses on its surface to reduce the risk of an infection. In particular, the term *"sterile"* denotes an object or substance, which has a bioburden load, which is the theoretical probability of a single viable microorganism being present on or in the sterilized unit, of lower than 10⁻⁶. The bioburden load can be measured i.e., according to ISO 11737-1:2018.

The term *"sterilization"* as used herein denotes a method to destroy all forms of living microorganisms from a substance. As there is always a certain probability of at least one microorganism to survive such procedure, the aim of sterilization is the reduction of initially present microorganisms or other potential pathogens. Generally, sterilization is accepted to be achieved if the bioburden load of the substance of object to be sterilized is lower than 10⁻⁶. The bioburden load can be measured, e.g., according to ISO 11737-1:2018. Sterilization can be achieved using several methods. In one sterilization process the object is heated up to at least 105 C, preferably 121°C, for a certain duration to achieve a sterile object. Thereby, the object should not be deformed by the elevated temperature in a way that hinders its expected use. Preferably, the heating step is performed in an autoclave. In another sterilization process, the object is brought into contact with toxic gases such as a mixture of ethylene oxide and carbon dioxide. Filtration methods are also used to sterilize liquids, i.e., by using membrane filters, Seitz filters, and/or candle filters. Finally, sterilization can be achieved by indirect energy import into or onto the object, e.g., by ultrasonic waves, ultraviolet light, as well as by high energy particles (such as electrons, gamma- or X-rays).

The term *"head space"* as used herein denotes a volume filled with gas defined within a bag.

The term *"liquid-tight"* as used herein denotes a quality of an object to function as a barrier for a liquid, preferably for a water-based liquid.

The term *"fluidly closed"* as used herein denotes a former fluid connection, which has been liquid-tightly closed by another entity.

The term *"barrier layer"* as used herein denotes a material, which can slow down the process of oxygen permeation. Preferably, it comprises, more preferably consists of, a plastic barrier material, most preferably ethylene-vinyl alcohol (EVOH), or a metal oxide material, most preferably a silicon oxide layer or an aluminum oxide layer. Such barrier layer typically requires a supporting or binding layer to adhere to the pharmaceutical container wall material.

The term *"air intake"* as used herein denotes the increase of a container internal gas volume (also called primary head space) when exposed to ambient air during a given time, which results from the difference between the amount of gases (e.g., air, oxygen, carbon dioxide, nitrogen) that diffuse into the container through its walls (e.g., film or extrusion-blown body, port system, etc.) and the amount of gases (e.g. water vapor) that diffuse out of said container. Diffusion typically depends on the specific gas and/or mixture thereof, on the container wall specific permeability to the various gases (eventually comprising a barrier to selected gases) and its thickness, on the temperature, as well as on physical and/or chemical gradients of the various gases. Such gradients can further be affected by the chemistry of the packed pharmaceutical solution. Air intake also depends on the external surface of the container, so that flatter containers typically exhibit a higher air intake (i.e., increase of primary head space) with respect to the initial head space at the time of manufacturing. If the container wall comprises a barrier to a specific gas, the mixture of gases that permeate into the container may not be ambient air, but gas depleted from one or the other of its constituent gases.

The term *"waterloss"* as used herein denotes the loss of water in the packed pharmaceutical solution as a consequence of the diffusion of water vapor out of the bag through its walls (e.g., film or extrusion-blown body, port system, etc.).

The term *"pharmaceutical container"* as used herein denotes a container suitable for use in pharmaceutical applications, preferably drug and/or nutrient delivery to a patient, most preferably intravenous drug and/or nutrient delivery to a patient. Most preferably, the pharmaceutical container is an intravenous (IV) container.

The term *"intravenous container"* or "*IV container"* as used herein denotes a container suitable for being filled with and storing a sterile liquid, wherein the IV container is suitable for intravenous application of said sterile liquid to a patient. The IV container is preferably selected from semi rigid bottles, preferably prepared by a blow-fill-seal process , and flexible pouches. Preferably, the material of the IV container comprises, preferably consists of, a polymer. Preferably, the IV container fulfills the following requirements: The IV container preferably withstands heat sterilization at 125°C for 20 min. The wall of the IV container preferably remains transparent after sterilization (haze <30%). The IV container preferably resists a drop from a height of 1.0 m for bags having a volume of equal to or lower than 500 ml and of 0.75 m for a bag having a volume of in the range of from 500 to 1000 ml, according to ISO 15747. The IV container preferably resists to a positive gauge pressure of 50 kPa for at least 15 min. The IV container has a water loss of less than 5%, preferably less than 3%, over the shelf life (24 months, preferably 36 months) at 25°C/40%RH. The IV container has an air intake of lower than 10 ml over the shelf life (24 months, preferably 36 months) at 25°C/40%RH. Preferably, the IV container is a flexible pouch.

The term *"oxygen scavenger"* as used herein denotes a compound, which is suitable for binding molecular oxygen from the surrounding atmosphere. The binding may occur physically or chemically. Preferably, the binding occurs chemically. Most preferably, the oxygen scavenger is an antioxidant.

The term *"standard conditions"* as used herein denotes a temperature of 23±2 °C and a relative humidity of 50±2%.

The term *"nominal volume"* is the declared volume of the pharmaceutical solution that shall, as per pharmacopeial requirements, at least be possible to be extracted from the container during the shelf life of the product.

The term *"total volume"* is the maximum volume which can be contained in the container, preferably bag, at pressure equilibrium with the surrounding environment. The total volume of a container is measured by filling said container with water at 23±2 °C and at zero gauge pressure, wherein the water is filled in the bag without any further pressure other than provided by the gravity until the bag is completely filled with water without any visible introduced gas, wherein the volume of the bag cavity is the volume of the water. It should be determined for containers after the sterilization process, as exposure to heat can deform the container and/or shrink/stress the materials of its construction.

### Detailed Description of the Invention

As set out above, the present invention provides a bag for pharmaceutical application having reduced, preferably at least 50 wt.-% less, film material than the market standards. It has now surprisingly found that this object can be achieved by a bag for pharmaceutical application, comprising a bag body enclosing a bag cavity, the bag body comprising at least one opening fluidly connecting the bag cavity with the environment, wherein the bag body comprises a body wall, wherein the body wall comprises a film, characterized in that the film has a grammage of equal to or less than 270 g/m² measured according to ISO 536:2019, and the film has an air transmission rate measured according to ISO 15105-1:2007 Annex A (Differential-pressure method, using a pressure sensor) at standard conditions, which results in a volume increase of air per year, which is not higher than 3% of the total volume of the bag cavity.

Preferably, the pharmaceutical bag according to the present invention is an intravenous (IV) bag.

As mentioned above, the pharmaceutical bag according to the present invention assures that only one packaging layer is necessary due to the combination of lightweight polymer material having the desired barrier properties and mechanical properties. It is further ensured that the packaging does not reach a certain weight per square meter to allow for reduced environmental impact. Consequently, a second bag wrapped around the first is not necessary, thus reducing the amount and weight of plastic material needed to pack and protect the pharmaceutical solution.

The film for the wall of the pharmaceutical bag according to the present invention provides a balanced profile of barrier properties and mechanical properties. Hence, preferably, the film of the pharmaceutical bag according to the present invention has an air transmission rate measured according to ISO 15105-1:2007 Annex A (Differential-pressure method, using a pressure sensor) at standard conditions, which results in a maximum air intake into the bag of not higher than 6 cm³ per year. Furthermore, preferably, the film of the pharmaceutical bag according to the present invention has an air transmission rate equal to or lower than 50 cm³/(m²·day·atm), measured according to ISO 15105-1:2007 Annex A (Differential-pressure method, using a pressure sensor) at 23±2 °C and 0% relative humidity. It should be understood that the total air intake of a pharmaceutical bag according to the present invention not only depends on the mere air transmission properties of the used film, but also on the size of the bag. Pharmaceutical bags having a larger nominal volume normally have also a lower surface to volume ratio due to the substantially cylindrical shape of such larger pharmaceutical bag compared to flatter bags of smaller nominal volume. Hence, if pharmaceutical bags with a lower volume are implemented, at some volume the air transmission rate of equal to or lower than 50 cm³/(m²·day·atm), measured according to ISO 15105-1:2007 Annex A (Differential-pressure method, using a pressure sensor) at 23±2 °C and 0% relative humidity would not be low enough to prevent an unwanted air intake. Hence the total air intake has also been defined above. It should be understood by the skilled person that in case of lower nominal volumes of the pharmaceutical container also films with lower air transmission rates can be implemented to reach the claimed total air intake.

Hence, preferably, the ratio of the surface to the volume of the bag cavity of the pharmaceutical bag according to the present invention is not higher than 100 cm²/ml, preferably not higher than 50 cm²/ml, more preferably not higher than 10 cm²/ml, and most preferably not higher than 5 cm²/ml. This assures that the barrier properties of the film can be achieved with a larger variety of materials. Likewise, preferably, the cavity of the pharmaceutical bag according to the present invention has a nominal volume in the range from 20 ml to 5000 ml. If the volume is smaller than this range, the choice of materials for the film becomes limited. Usually, the nominal volume of the pharmaceutical bags for intravenous application is not larger than 5000 ml.

Sterilization might have an impact on the barrier properties of the film of the pharmaceutical bag according to the present invention. As sterilization requires demanding conditions, also the material might change slightly. As the barrier properties may be sensitive to such conditions, it is preferred that the transmission rate is measured after sterilization of the filled pharmaceutical bag, preferably after production of the filled pharmaceutical bag according to the present invention. Indeed, the air intake is more significant during the storage of the bag, which can last up to several years than during production and/or sterilization, which usually lasts only a few hours.

The film of the pharmaceutical bag according to the present invention can be a single layer. However, preferably, in the pharmaceutical bag according to the present invention, the film is a multilayer film comprising at least two layers. This has the advantage that different materials with different properties, preferably different barrier properties and different mechanical properties, can be used.

Preferably, the multilayer film of the pharmaceutical bag according to the present invention comprises a barrier layer. Furthermore, preferably, the multilayer film of the pharmaceutical bag according to the present invention comprises a support layer. Most preferably, the multilayer film of the pharmaceutical bag according to the present invention comprises a barrier layer and a support layer.

The barrier layer of the film of the pharmaceutical bag according to the present invention preferably comprises a material with a high gas barrier, in particular a high barrier to air, water vapor, and/or oxygen. More preferably, the barrier layer of the film of the pharmaceutical bag according to the present invention comprises, preferably consists of, a material selected from the list consisting of ethylene-vinyl alcohol (EVOH), polyvinyl alcohol (PVOH), metal oxides, preferably silicon oxide (SiOₓ) or aluminum oxide (AlOₓ), polyamide (PA), cyclic polyolefins, polymer/clay nano composites, or mixtures thereof. Most preferably, the barrier layer consists of metal oxides, preferably silicon or aluminum oxide.

The support layer of the film of the pharmaceutical bag according to the present invention preferably comprises a material having improved mechanical properties such as impact properties. Hence, more preferably, the support layer of the pharmaceutical bag according to the present invention comprises, preferably consists of, a polymer material, wherein the polymer material preferably comprises, more preferably consists of, a polyolefin (PO), more preferably a polypropylene (PP), and most preferably an oriented polypropylene (OPP). It has been found that in particular oriented polypropylenes result in the desired mechanical properties without the requirement of a high thickness of the support laxer.

The multilayer film of the pharmaceutical bag according to the present invention can be produced by any means known to the skilled person to produce multilayer films. Preferably, the multilayer film of the pharmaceutical bag according to the present invention is produced by coextrusion or lamination. It should be understood that coextrusion can be utilized, if the layers to be coextruded, preferably the barrier layer and the support layer, are both thermoplastic polymers. Hence, both polymers are molten in an extruder and coextruded to a film. Eventually, preferably in case of EVOH, tie layers are necessary for coextrusion. In case at least one of the layers is not made from a thermoplastic material or the layer is deposited onto a film previously constituted, such as from metal oxides, it is preferred that the multilayer film of the pharmaceutical bag according to the present invention is produced by lamination.

Preferably, the polymer material of the support layer has a glass transition temperature *T_{g}* measured according to ASTM D3418, of not more than 80 °C, preferably not more than 60 °C, more preferably not more than 40 °C, and most preferably not more than 20 °C. This ensures thermal stability in particular in view of the sterilization conditions used. Hence, in case the barrier layer is also made from a polymer material, the polymer material of the barrier layer has a glass transition temperature *T_{g}* measured according to ASTM D3418, of not more than 80 °C, preferably not more than 60 °C, more preferably not more than 40 °C, and most preferably not more than 20 °C.

It is preferred that the film of the pharmaceutical bag according to the present invention comprises a gas scavenger, preferably comprises an oxygen scavenger. This further reduces the oxygen permeability of the material. Even if the air permeability is in a certain range, this embodiment can still affect that the oxygen, which otherwise would be introduced by the air intake, is scavenged in the film. In such a way, the amount of oxygen diffusing into the container is reduced, which further reduces the likelihood of oxidative degradation of the packed pharmaceutical solution, hence increases its shelf life.

Preferably, the amount of polyolefin (PO) in the film of the pharmaceutical bag according to the present invention is at least 65 wt.-% with respect to the total weight of the film. More preferably, the amount of polypropylene (PP) in the film of the pharmaceutical bag according to the present invention is at least 90 wt.-% with respect to the total weight of the film, more preferably at least 95 wt.-%. Likewise, in an alternatively preferred embodiment of the pharmaceutical bag of the present invention, the amount of polyethylene (PE) in the film is at least 90 wt.-% with respect to the total weight of the film, more preferably at least 95 wt.-%. High amounts of polyolefin, in particular polypropylene, ensure improved mechanical properties, such as impact properties.

It should be noted that the multilayer film of the pharmaceutical bag according to the present invention is not limited to just one barrier layer and just one support layer. In an alternative embodiment of the pharmaceutical bag according to the present invention, the multilayer comprises at least two support layers and/or at least two barrier layers.

However, preferably, the multilayer film of the pharmaceutical bag according to the present invention further comprises at least one sealing layer. Preferably, the sealing layer comprises, preferably consists of, a polyolefin (PO), preferably a polypropylene (PP). The sealing layer has the advantage that stickiness, which might be caused by the barrier layer, is prevented.

Generally, the order of the support layer, the barrier layer, and optionally the sealing layer, in the multilayer film of the pharmaceutical bag according to the present invention is not fixed. However, preferably, the support layer is the outermost layer of the multilayer film of the pharmaceutical bag according to the present invention with respect to the position of the bag cavity. This has the advantage that the remaining part of the multilayer film is protected by the mechanical properties, particularly impact properties of the support layer of the multilayer film.

Also preferably, the sealing layer is the innermost layer of the multilayer film of the pharmaceutical bag according to the present invention with respect to the position of the bag cavity. This prevents interaction between the barrier layer and the filling liquid of the pharmaceutical bag according to the present invention. Furthermore, it enables weldability of the layers to form a bag via the sealing layer.

In a preferred embodiment of the pharmaceutical bag according to the present invention the film has a grammage of equal to or less than 250 g/m² measured according to ISO 536:2019, preferably of equal to or less than 220 g/m², more preferably of equal to or less than 200 g/m², and most preferably of equal to or less than 180 g/m². The lower the film grammage is, the better the sustainability of the pharmaceutical bag according to the present invention, as less material can be used.

The film of the pharmaceutical bag according to the present invention is in particular characterized by the barrier capabilities. These are influenced by all layers, i.e., also by the sealing layer and the support layer in the multilayer film of the pharmaceutical bag according to the present invention. Hence, the overall barrier properties of the film, preferably the multilayer film, of the pharmaceutical bag according to the present invention are relevant for the present invention.

Hence, preferably, in the pharmaceutical bag according to the present invention the film has an air transmission rate measured according to ISO 15105-1:2007 Annex A (Differential-pressure method, using a pressure sensor), at 23±2 °C and 0% relative humidity of less than 50 cm³/(m²·day·atm), preferably less than 10 cm³/(m²·day·atm), preferably less than 2 cm³/(m²·day·atm), and even preferably less than 1 cm³/(m²·day·atm). The lower the air transmission rate is, the lower the probability of intake of oxygen, which might react with the compounds within the pharmaceutical bag according to the present invention. Furthermore, less air intake leads to lower volume increase of the first head space of the pharmaceutical bag according to the present invention. Finally, lower air transmission rates allow for less material to be required to achieve the barrier properties of the film, again resulting in improved sustainability of the pharmaceutical bag according to the present invention.

The bag according to any of the preceding claims, wherein the water vapor transmission rate, of the film is equal to or less than 5 g/(m²·day), preferably equal to or less than 3 g/(m²·day), and most preferably equal to or less than 2 g/(m²·day) measured according to ASTM F1249 or ISO 15106-2 at 38±2 °C and 90±2% relative humidity.

Likewise, in the pharmaceutical bag according to the present invention the values of physical properties, preferably the value of the air transmission rate measured according to ISO 15105-1:2007 Annex A (Differential-pressure method, using a pressure sensor), at 23±2 °C and 0% relative humidity and/or vapor transmission rate ASTM F1249 or ISO 15106-2 at 38±2 °C and 90±2% relative humidity, of the film after sterilization at a temperature equal to or higher than 105 °C, preferably at a temperature in the range of from 105 °C to 128 °C, are in a range of ±10% of the respective values prior to sterilization, preferably in a range of ±5% of the respective values prior to sterilization, most preferably in a range of ±2% of the respective values prior to sterilization.

As already mentioned above, one requirement of a pharmaceutical bag may be that the liquid filled within the bag can be seen from outside. Therefore, the film of the bag must maintain a certain transparency. Hence, preferably, the film of the pharmaceutical bag according to the present invention has a haze value measured according to ASTM D1003, Procedure B, of less than 60%, preferably less than 30%, more preferably less than 25%, and most preferably less than 15%.

Usually, the pharmaceutical bag according to the present invention is used in a hanging position to allow gravity to remove the liquid from the bag and transport it to the patient. Hence, preferably, the pharmaceutical bag according to the present invention comprises hanging means. Preferable hanging means are selected from the list comprising a hole, a hook, a magnet, a glue part, or a rope. Most preferably, the hanging means is at least a hole suitable for hanging the bag on a pole, preferably a reinforced hole.

Preferably, the bag comprises a part intended for opening the bag before pharmaceutical application. Hence, the pharmaceutical bag according to the present invention preferably already provides an opening, which is temporarily closed. Preferably, the opening of the pharmaceutical bag according to the present invention includes at least one access port, wherein the access port is preferably selected from the list consisting of an administration port, a withdrawal port, and a medication port. More preferably, the pharmaceutical bag according to the present invention comprises at least one administration port and at least one opening, which can be selected from a withdrawal port and a medication port.

Preferably, the pharmaceutical bag according to the present invention is filled with a liquid and a gas, wherein the volume of the gas defines a first head space and wherein the volume of the first head space is not larger than 5% of the total volume of the bag cavity, preferably not larger than 2%, and most preferably not larger than 1%. More preferably, the liquid comprises an oxygen sensitive material. Most preferably, the oxygen sensitive material is a pharmaceutically active material. The lower the volume of the first head space is, the lower oxygen migration from the first head space to the liquid can occur thereby causing less deterioration of the oxygen sensitive material. Alternatively, the gas in the bag is an oxygen depleted gas.

While the pharmaceutical bag according to the present invention has been developed to be used without a secondary packaging, such a secondary packaging , preferably an overwrap, is not necessarily excluded. One reason for adding such a secondary packaging could be dust protection and/or ensuring sterility or sanitization of the bag.

### Experimental Part

### Measurement Methods

### a) Air intake

The air intake has been measured according to the procedure as set out in the following. The head space of the bag is measured at different timepoints during a defined period of time. The bags are maintained during that period in a controlled air atmosphere as regards temperature and humidity. In a first step, the head space of the bag is sucked out of the bag using a syringe, wherein the needle of the syringe is inserted through a resealable elastomeric closure of the bag. The volume of air extracted from the bag is noted down. In a second step, the head space is reinserted back into the bag for the next timepoints.

### b) Water loss

The water loss has been measured according to the procedure as set out in the following. The weight of the bag is measured at different timepoints during a defined period of time. The bags are maintained during that period in a controlled air atmosphere as regards temperature and humidity. The water loss is calculated between two timepoints by dividing the difference of the corresponding weight measurements by the weight of the initial filling volume.

### c) Air transmission rate

The air transmission rate has been measured according to ISO 15105-1:2007 Annex A (Differential-pressure method, using a pressure sensor) at standard conditions. The measurement was performed using a VAC-V2 apparatus from Labthink.

### d) Oxygen transmission rate

The oxygen transmission rate has been measured according to ASTM F1927. The measurements were performed on an OxySense 8101e from Systech Illinois.

### e) Water vapor transmission rate

The water vapor transmission rate has been measured according to ASTM F3299. The measurements were performed on an AquaSense 7101 from Systech Illinois.

### f) Film grammage

The film has a grammage has been measured according to ISO 536:2019 using a scale.

### Examples

In the following comparative examples showing the dependency of the air intake and water loss on polymer films usually used as gas barrier films in IV bags are described. Furthermore, inventive examples are shown, which show gas barrier layers according to the invention.

### a) Materials

The following materials have been used in the examples of the present application:

| | |
|---|---|
| Film 1: | PP-based film |
| Film 2: | PP/EVOH/PP, 200 µm, having an oxygen transmission rate of lower than or equal to 0.2 cc/(m²*day*bar) at 23 °C/50%rH) and a water vapor transmission rate of lower than or equal to 2.5 g/(m²*day) @ 38 °C/100%rH) |
| Film 3: | PET/SiOₓ/PP of 170 µm, having an oxygen transmission rate of lower than or equal to 1.5 cc/(m²*day*bar) at 23 °C/50%rH) and a water vapor transmission rate of lower than or equal to 4 g/(m²*day) at 38 °C/100%rH) |

### b) Comparative Examples CE1-3

Air intake over the shelf life has been measured for polyolefin-based films used in the market for IV applications. Therefore, bags made of PP-based film (Film 1), which are not overwrapped, have been filled with WFI (water for injection) and the air intake has been measured over time. The head space present in the bag at the beginning of the test was varied between CE1, CE2, and CE3. The bags as outlined in Table 1 were measured.

**Table 1: Bags investigated in CE1-3**

| | Size* | Material | Headspace | Wall thickness | Air intake | Water loss |
|---|---|---|---|---|---|---|
| | [ml] | | [ml] | [µm] | [cm³/month] | [%/month] |
| CE1 | 500 | Film 1 | 0 | 200 | 3.5 | 0.11 |
| CE2 | 500 | Film 1 | 10 | 200 | 4.2 | 0.11 |
| CE3 | 500 | Film 1 | 25 | 200 | 4.5 | 0.11 |

| | | | | | | |
|---|---|---|---|---|---|---|
| * Nominal volume | | | | | | |

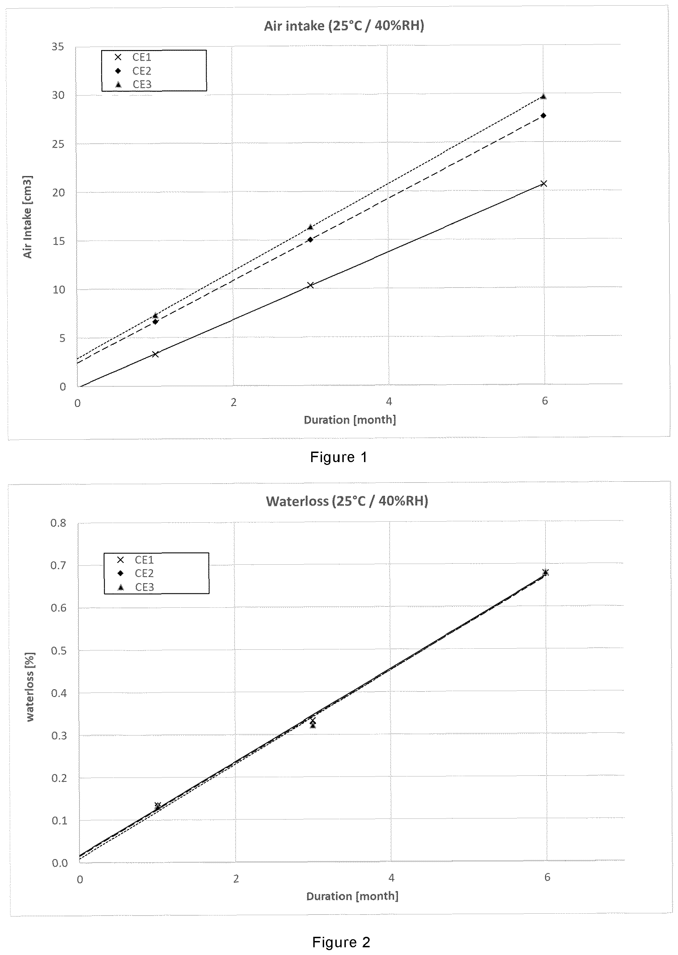

The results for the air intake are shown in Figure 1. For 500 ml bags having a typically used gas barrier, the air intake can go up to 100 ml after 3 years of shelf life, whereas the specification typically requires < 20 ml. The main background of this specification is to avoid any risk that air enters the patient blood stream. Air intake stems from the sum of the air intake via the administration line (about 15 ml) and via the pouch dead volume (about 5 ml). To meet this specification at the end of shelf life, the initial head space of the bag during the production process must be managed to be less than 10 ml and the air intake must remain lower than 10 ml.

Water loss has also been measured for the bags of CE1-3. The results are reported in Figure 2. It can be seen from the results that current typical primary films from the market for IV applications (such as made from Film 1) could be used without overwrap, but only for large volumes (500 ml and 1000 ml). For smaller volumes, the water loss is slightly too high for the desired shelf-life.

### c) Inventive Examples and Comparative Example 4

Air intake and water loss over the shelf life have been measured for different films. Therefore, bags made of Films 1, 2, and 3, which are not overwrapped, have been filled with WFI and the air intake as well as water loss have been measured over time. The bags as outlined in Table 2 were measured.

**Table 2: Bags investigated in CE4, IE1-3**

| | Size* | Material | Headspace | Wall thickness | Air intake | Water loss |
|---|---|---|---|---|---|---|
| | [ml] | | [ml] | [µm] | [cm³/month] | [%/months] |
| CE1 | 500 | Film 1 | 0 | 200 | 3.5 | 0.11 |
| IE1 | 500 | Film 2 | 0 | 190 | 0.18 | 0.08 |
| IE2 | 500 | Film 3 | 0 | 175 | 0.25 | 0.06 |

| | | | | | | |
|---|---|---|---|---|---|---|
| * Nominal volume | | | | | | |

The inventive examples show that the barrier layers of the film have a significant impact on the air intake of the pharmaceutical bag. The inventive examples allow to meet the specification at the end of shelf-life.

## Claims

1. A bag for pharmaceutical application, comprising a bag body enclosing a bag cavity, the bag body comprising at least one opening fluidly connecting the bag cavity with the environment, wherein the bag body comprises a body wall, wherein the body wall comprises a film,
**characterized in that**
the film has a grammage of equal to or less than 270 g/m² measured according to ISO 536:2019, and
the film has an air transmission rate measured according to ISO 15105-1:2007 Annex A (Differential-pressure method, using a pressure sensor) at standard conditions, which results in a volume increase of air per year, which is not higher than 3% of the total volume of the bag cavity.

2. The bag according to claim 1, wherein the film has an air transmission rate measured according to ISO 15105-1:2007 Annex A (Differential-pressure method, using a pressure sensor) at standard conditions, which results in a maximum air intake into the bag of not higher than 6 cm³ per year.

3. The bag according to claims 1 or 2, wherein the film has an air transmission rate measured according to ISO 15105-1:2007 Annex A (Differential-pressure method, using a pressure sensor), at 23±2 °C and 0% relative humidity of less than 50 cm³/(m²·day·atm), preferably less than 10 cm³/(m²·day·atm), preferably less than 2 cm³/(m²·day·atm), and even preferably less than 1 cm³/(m²·day·atm).

4. The bag according to any of the preceding claims, wherein the ratio of the surface to the volume of the bag cavity is not higher than 10 cm²/ml, preferably not higher than 5 cm²/ml, and most preferably not higher than 3 cm²/ml.

5. The bag according to any of the preceding claims, wherein the cavity of the bag has a volume in the range from 20 ml to 5000 ml.

6. The bag according to any of the preceding claims, wherein the film is a multilayer film comprising a barrier layer and/or a support layer.

7. The bag according to claim 6, wherein the barrier layer comprises ethylene-vinyl alcohol (EVOH), polyvinyl alcohol (PVOH), metal oxides, preferably silicon oxide (SiOₓ) or aluminum oxide (AlOₓ), polyamide (PA), cyclic polyolefins, polymer/clay nano composites, or mixtures thereof.

8. The bag according to claims 6 or 7, wherein the support layer comprises a polymer material, preferably a polyolefin (PO), more preferably a polypropylene (PP), and most preferably an oriented polypropylene (OPP).

9. The bag according to any of the preceding claims 6 to 8, wherein the support layer is the outermost layer with respect to the position of the bag cavity.

10. The bag according to any of the preceding claims 6 to 9, wherein the multilayer film comprises at least one sealing layer, wherein the sealing layer preferably comprises a polyolefin (PO), preferably a polypropylene (PP).

11. The bag according to claim 10, wherein the sealing layer is the innermost layer with respect to the position of the bag cavity.

12. The bag according to any of the preceding claims, wherein the film has a grammage of equal to or less than 250 g/m² measured according to ISO 536:2019, preferably of equal to or less than 220 g/m², more preferably of equal to or less than 200 g/m², and most preferably of equal to or less than 180 g/m².

13. The bag according to any of the preceding claims, wherein the film has a haze of equal to or lower than 60% measured according to ASTM D1003 or ISO 14782, preferably equal to or lower than 30%.

14. The bag according to any of the preceding claims, wherein the bag is filled with a liquid and a gas, wherein the volume of the gas defines a first head space and wherein the volume of the head space is not larger than 5% of the total volume of the bag cavity, preferably not larger than 2%, and most preferably not larger than 1%.

15. The bag according to any of the preceding claims, wherein the bag further comprises an overwrap and wherein the volume between the overwrap and the body wall defines a second head space.
